# EUROPEAN PATENT APPLICATION

(11) **EP 1 326 319 A2**
(43) Date of publication of application: **09.07.2003**
(21) Application number: 02028189.5
(22) Date of filing: 19.12.2002
(51) Int. Cl.: H02K 1/27, H02K 15/03

(54) **Rotor, method of manufacturing the same and rotary machine**

(30) Priority: 25.12.2001 JP 2001391337
(71) Applicant: Hitachi, Ltd., Chiyoda-ku, Tokyo 101-8010 (JP); HITACHI METALS, LTD., Minato.ku, Tokyo 105-8614 (JP)
(72) Inventor: Komuro, Matahiro, Hitachi-shi, Ibaraki 317-0076 (JP); Kitamura, Masashi, Mito-shi, Ibaraki 310-0842 (JP); Kaneda, Junya, Hitachi-shi, Ibaraki 316-0003 (JP); Ito, Motoya, Hitachinaka-shi, Ibaraki 312-0052 (JP); Abe, Teruyoshi, Hitachi-shi, Ibaraki 319-1225 (JP); Kuriyama, Yoshihiko, Kumagaya-shi, Saitama 360-0162 (JP)
(74) Representative: Beetz & Partner Patentanwälte

(57) **Abstract**

A rotor has magnets (1) segmented in a circumferential direction of a periphery of a shaft (3), wherein magnetizing directions of the segmented magnets (1) continuously vary, and a non-magnetic material or a ferromagnetic material (4) is interposed in a circumferential gap between the segmented magnets (1). Further, a method of manufacturing a rotor comprises steps of arranging coils so that a longitudinal direction of each of the coils is along an axis of the shaft (3) and magnetizing the segmented magnets (1). Still further, a rotary machine uses the rotor.

## Description

### BACKGROUND OF THE INVENTION

### FIELD OF THE INVENTION

The present invention relates to a novel rotor for a motor using a rotor having magnets arranged in the outer periphery of the rotating shaft, a method of manufacturing the rotor and a rotary machine.

### DESCRIPTION OF PRIOR ART

Japanese Patent Application Laid-Open No.7-336916 discloses an example in which the direction of magnetization of a magnet is continuously varied in the circumferential direction and the divided magnets are arranged in the circumferential direction. In this gazette, it is described that in regard to a hollow shaft motor, the bore diameter of the shaft bore can be made large by employing polar anisotropic magnets. Further, the gazette also shows that the N-pole segments and the S-pole segments are alternately arranged in the circumferential direction of the outer periphery of a cylindrical yoke so as to attract one another.

### SUMMARY OF THE INVENTION

When the segment-shaped magnets are used, the gap between the arc segment-shaped magnets in the circumferential direction of the rotor needs to be correctly adjusted. If the motor characteristics such as induced voltage, cogging torque and so on can be satisfied by widening the gap between the arc segment-shaped magnets, the magnet volume of the motor can be reduced. If the gap between the arc segment-shaped magnets is set, the motor can be manufactured in taking the magnet shape tolerance into consideration. Since mass-produced magnets have dispersion in anisotropy, dispersion in orientation and errors in magnetization, the motor needs to be designed in taking these dispersions into consideration.

The surface magnetic flux density in the case of forming the magnetization direction distribution described above is increased about 1.2 to 1.5 times as large as the surface magnetic flux density in the case of radial magnets each of which is magnetized in a radial direction or has magnetic anisotropy. The cogging torque in the sinusoidal magnetization distribution becomes smaller than the cogging torque in the case of the radial magnets. Therefore, when the induced voltage is made nearly equal to that in the case of the radial magnets, the magnet volume in the case of the sinusoidal magnetization distribution can be decreased smaller than the magnet volume in the case of the radial magnets.

The rotor is mainly composed of magnets, a shaft, a magnet fixing agent (a bonding agent or a supporting material) and magnetic steel sheets. Among the above parts and materials, the magnet is the lowest in productivity, and the productivity of a magnet comprising a rear-earth element is particularly low. Therefore, reduction of the magnet volume results in improvement of the productivity of the rotor or the motor. In addition, by reducing the volume of magnets and by using a material having a small specific gravity between the magnets, the weight of the rotor can be reduced.

Further, in the cited publication described above, there is no description on the purpose of using the arc segment-shaped magnets, the manufacturing technique such as magnetization of the magnet, the gap between the magnets, the material of the magnet, and characteristics of the motor at all.

An object of the present invention is to provide a rotor which has a high induced voltage characteristic and a low cogging torque characteristic and can reduce the magnet volume smaller than the magnet volume of a ring-shaped magnet of one piece, and also to provide a method of manufacturing the rotor and a rotary machine using the rotor.

The present invention is characterized by a rotor having magnets segmented in a circumferential direction of a periphery of a shaft, wherein magnetizing directions of the segmented magnets continuously vary, and a non-magnetic material or a ferromagnetic material is interposed in a circumferential gap between the segmented magnets.

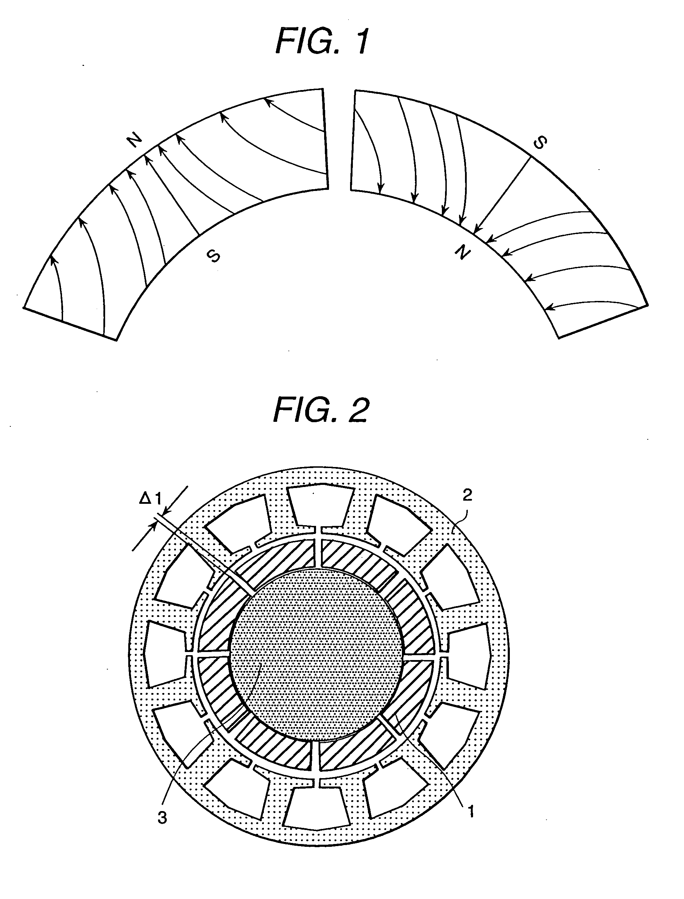

Further, the rotor in accordance with the present invention is characterized in that a direction of a line of magnetic force in each of the segmented magnets in a circumferential center of each of the segmented magnets is directed to a radial direction, and directions of lines of magnetic force in each of the segmented magnets in both sides of the center of the magnet continuously vary with respect to the line of magnetic force in the center and are directed toward directions intersecting with the line of magnetic force in the center, as shown in FIG. 1; and by that magnetizing directions of the magnet continuously vary; and that a non-magnetic material or a ferromagnetic material is interposed in a circumferential gap between the segmented magnets. In some cases, the distribution of the magnetic flux densities has a harmonic component in the sinusoidal waveform. The magnetizing directions and the magnetized directions described above are equal to the directions of the lines of magnetic force, and the directions of lines of magnetic force in both sides of the center are directed toward directions intersecting with the magnetizing direction or the magnetized direction in the center, and the directions of the lines of magnetic force in both sides nearer to the center are nearly parallel to the magnetizing or magnetized direction in the center, and the degrees of the intersecting angle of the lines of magnetic force closer to the both ends of the segment magnet are larger.

Further, the present invention is characterized by a rotor having magnets segmented in a circumferential direction of a periphery of a shaft, wherein each of the segmented magnets has a polar anisotropy and is formed of a bond magnet or a sintered magnet containing a rare-earth element, and a non-magnetic material or a ferromagnetic material is interposed in a circumferential gap between the segmented magnets. The polar anisotropies in the magnetizing direction, the magnetized direction and the direction of magnetic force are the same as those described above, and all the anisotropies are the radial anisotropies of the radial direction.

It is preferable that the magnet is formed of an isotropic magnet or an anisotropic magnet containing a rare-earth element. The bond magnet is made of a bonded material composed of a magnet substance and an organic resin.

In a method of manufacturing a rotor which has magnets segmented in a circumferential direction of a periphery of a shaft and has a non-magnetic material or a ferromagnetic material interposed in a circumferential gap between the segmented magnets, the present invention is characterized by that the segmented magnets are formed by flowing current in a direction along an axis of the shaft to magnetize the segmented magnets; and that the method comprises the steps of arranging coils so that a longitudinal direction of each of the coils is along an axis of said shaft, and forming the magnets by flowing current through the coils to magnetize the segmented magnets.

Each of the segmented magnets is made of a metal containing a rare-earth element, and the magnetization may be performed before attaching the segmented magnets or after attaching the segmented magnets to said shaft.

That is, in the present invention, magnetization of the arc segment-shaped magnets continuously varies in the circumferential direction. By making the magnetized directions continuously vary in a sinusoidal waveform, the distribution of magnetic flux densities on the surface of the rotor also become a nearly sinusoidal waveform. Therefore, it is possible to provide a rotor in which the magnetized directions of the magnet vary in a sinusoidal waveform in the circumferential direction inside the magnet, the magnetic flux densities on the surface of the magnet showing a sinusoidal waveform distribution, the magnet volume of the arc segment-shaped magnets with the sinusoidal waveform distribution of magnetization being limited to a small amount, and the productivity being high, desirable motor characteristics being ensured.

The rotor comprises the magnets and the shaft, and the rotor is called as a surface magnet rotor when the magnets are arranged on the surface of the rotor. The magnets are segmented in the circumferential direction. In a case where the magnet is segmented, for example, into 8 pieces, each of the segmented magnets corresponds to one pole. A surface magnet rotor using a ring-shaped magnet of one piece instead of the arc segment-shaped magnets described above is also put in practical use. In order to reduce a magnet volume in the surface magnet rotor using the ring-shaped magnet, it is effective to thinning the thickness of the ring-shaped magnet. However, the surface magnetic flux density is decreased. In the case of the magnets segmented in the circumferential direction, the magnetic flux density is also decreased when the magnet thickness is thinned. However, a magnetic flux density 1.2 to 1.5 times higher than that in the radial magnetization can be obtained by using the magnets magnetized in a nearly sinusoidal waveform. Therefore, in order to obtain the surface magnetic flux density (the maximum value) equal to that in the case of the radial magnetization, the volume of the segmented magnets magnetized in the sinusoidal waveform can be decreased. The ratio of (inner diameter) / (outer diameter) of the segmented magnet is preferably smaller than 0.9. When the ratio is larger than 0.9, the surface magnetic flux density is rapidly decreased, and accordingly it is not preferable from the viewpoint of mass production. The lower limit of the ratio is preferably larger than 0.5.

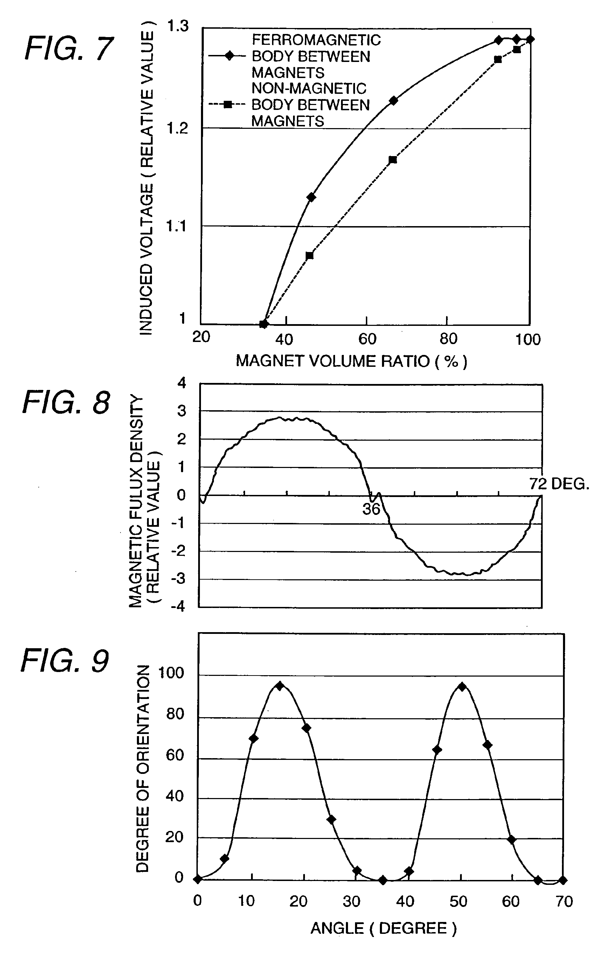

In the case of the magnetization of the near sinusoidal waveform, the angular dependence of the surface magnetic flux density becomes as shown in FIG. 8 which is to be described later. That is, FIG. 8 shows a measured result of a magnetic flux density distribution in the radial direction on the magnet surface for two pole portions, and the waveform is near sinusoidal. By optimizing the magnetized condition, the waveform deformation from the sinusoidal waveform in the surface magnetic flux density distribution can be reduced. In the case of the magnetization of such a near sinusoidal waveform (the waveform deformation smaller than about 20 %), a surface magnetic flux density higher than that in the radial ring magnet which is shaped in ring, and is magnetized in a radial direction or has magnetic anisotropy can be obtained. Therefore, by using the segmented magnets magnetized in the near sinusoidal waveform, the amount of a material used for the magnets can be reduced while the surface magnetic flux density equal to or higher than that of the radial ring-shaped magnet is being kept.

Further, in a case of a rotor having multi-segmented magnets exceeding two poles, it is preferable that a light-weight non-magnetic material (an alloy of Al, Mg or the like) is used for the material of the rotor shaft because the magnetic flux toward the inner peripheral side of the magnet becomes small due to the magnetization in the near sinusoidal waveform.

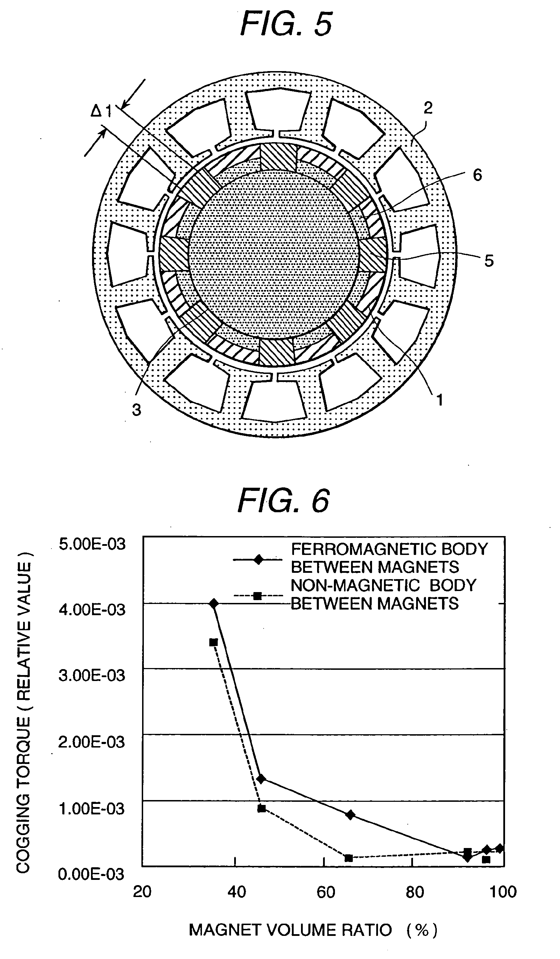

From evaluation of the motor characteristics, it was found that both of the induced voltage and the cogging torque are steeply changed in the range of the magnet volume ratio smaller than 40 %, as shown in FIG. 6 and FIG. 7. Particularly, the cogging torque in the range of the magnet volume ratio smaller than 40 % becomes more than 10 times as large as that at the magnet volume ratio of 100 %. Therefore, the magnet volume ratio is preferably larger than 40 %. Particularly, the magnet volume ratio is preferably in the range of 55 % to 95 %.

### BRIEF DESCRIPTION OF THE DRAWINGS

FIG. 1 is a cross-sectional view showing magnetic flux lines in a segment magnet in accordance with the present invention.
FIG. 2 is a cross-sectional view showing a rotor in accordance with the present invention.
FIG. 3 is a cross-sectional view showing a rotor in accordance with the present invention.
FIG. 4 is a cross-sectional view showing a rotor in accordance with the present invention.
FIG. 5 is a cross-sectional view showing a rotor in accordance with the present invention.
FIG. 6 is a graph showing an evaluated result of cogging torque.
FIG. 7 is a graph showing an evaluated result of induced voltage.
FIG. 8 is a graph showing a measured result of surface magnetic flux.
FIG. 9 is a graph showing an evaluated result of orientation.

### DESCRIPTION OF PREFERRED EMBODIMENTS

FIG. 2 is a cross-sectional view showing a rotor in accordance with the present invention. The number of poles should be two poles or more. FIG. 2 shows a case of 8 poles, and a ratio of (inner diameter) / (outer diameter) is 0.7 to 0.8. A magnet is segmented in the circumferential direction, and one segment of the magnet corresponds to one pole. A rotor shaft 3 is machined, and the surface of the rotor shaft is cleaned and applied with an adhesive. Then the segmented magnets 1 are fixed onto the rotor. In regard to magnetization of the magnets, there are a method in which the magnets magnetized before bonding are bonded onto the rotor shaft 3 and a method in which non-magnetized segmented magnets are bonded onto the rotor shaft 3 and then magnetized. Either of the above methods may be employed. After assembling the rotor, the rotor is set in the center of a stator 2. In the present embodiment, there exists a gap Δ1 in the circumferential direction between the segmented magnets. The amount of the magnets used therein can be reduced by increasing the gap Δ 1.

A method of the magnetization is that coils are arranged so that a longitudinal direction of the coils is along an axis of the rotor shaft 3, and current is flowed through said coils in directions different from each other with respect to individual magnets adjacent to each other. In regard to the arrangement of the coils, it is preferable that a plurality of coils are arranged between the individual magnets adjacent to each other or in the vicinity of magnet ends. By the magnetization described above, each of the magnetizing direction, the magnetized direction and the direction of line of magnetic force is continuously varied, and the feature is as shown in FIG. 1.

It is possible to make cogging torque ten times or less than the magnet volume ratio of 100% when a peripheral magnet volume ratio is made 40-99% and to make the induced voltage 70% or more than a value at the time the magnet volume ratio is 100%, and it is possible to provide a rotor of low cost and light weight.

Description will be made below on results of a study in regard to metals containing rear earth elements used for the materials of the magnets shown in FIG. 2. The segmented magnet 1 may be any one of an isotropic bond magnet, an anisotropic bond magnet, an isotropic sintered magnet and as anisotropic sintered magnet. In the case of the isotropic bond magnet, a magnet made of an intermetallic compound of Nd₂Fe₁₄B group, Sm₂Co₁₇ group, SmCo₅ group or Sm₂Fe₁₇N₃ group, and magnets made of a composite which is formed by bonding powder of one of these magnet materials with a mixed organic resin are applicable. In a case of a motor used under a high temperature environment, an Sm₂Co₁₇ group material or an NdFeB group material of coersive force kA/m (18koe) is used because the magnet material should be a high temperature resistant material. By using such a material and selecting a bond material, the motor can be used within the temperature range of 200 °C to 230 °C.

Injection molding, compression molding etc are used for manufacturing the arc segment magnet, and machining of the inner circumference and the outer circumference after molding can be eliminated. In the case of the isotropic bond magnet, the direction of magnetization of the magnet is determined by the direction of magnetizing magnetic field. Therefore, the magnets can be magnetized each pole using a magnetizing yoke, and then bonded onto the rotor shaft to form the rotor. In the case of the anisotropic bond magnet, the same group materials as the materials for the isotropic bond magnet can be selected, and directions of the anisotropy are adjusted before magnetizing by adding a magnetic field or stress to the magnet at manufacturing the magnets.

In this case, the coil position at molding and the yoke shape are designed so that the distribution of easily magnetized directions may become a sinusoidal waveform with respect to the circumferential direction. Evaluation of the direction of the anisotropy and the magnetized direction after being magnetized can be performed through magnetization measurement, magneto-optical measurement or structural measurement. The NbFeB group or the Sm₂Co₁₇ group material is used as the anisotropic sintered magnet material. In a case where the working temperature exceeds 100 °C, a rear earth element (Dr, Tb or the like) or Co may be added to the NbFeB group material. When the segmented magnet 1 is manufactured with the anisotropic sintered magnet, the magnetic powder needs to be oriented (in a sinusoidal waveform) before the sintering process. Therefore, it is important that the magnetic field distribution at the magnet position is form in a nearly sinusoidal waveform by designing the coil position and the orientating yoke shape. In order to check the near sinusoidal waveform orientation or magnetization before and after magnetization, the following evaluation methods are used.

That is, the evaluation methods are (1) a waveform analysis by measuring a distribution of the surface magnetic flux density using a hole element to obtain the angular dependence of the magnetic flux density; (2) an analysis of the angular dependence of the magnetization by evaluating by arranging the segment magnets in a ring-shape to evaluate angular dependences of magnetization (before and after magnetization); (3) an analysis of the angular dependence (positional dependence) of a loop obtained by measuring a magnetized state on the magnet surface of the segmented magnet one by one using the magneto-optical effect; and (4) an structural analysis in the circumferential direction, in the case of the anisotropic magnet. All the methods (1) to (4) can be also used for the ring magnet. By the methods described above, it is possible to judge whether or not the magnetized direction of the segment magnet is in a nearly sinusoidal waveform. The gap Δ1 in FIG. 2 is above 0.1 mm, and a non-magnetic material or a ferromagnetic material is inserted to the gap between the magnets.

As the non-magnetic material, Al, Cu, Mg or the other non-magnetic metal or alloy, or a resin is used. Further, as the ferromagnetic material, an Fe group material is used. In any cases, the magnets can be integrated with the shaft.

In the rotors of FIG. 2 to FIG. 5, the segment magnets 1 can be magnetized at a time after fixing the segment magnets 1 onto the rotor shaft 3. That is, post-magnetization can be performed. The post-magnetization can be applied to the isotropic magnets as well as to the anisotropic magnets. The magnets are magnetized by inserting the rotor into a magnetizing apparatus composed of magnetizing coils and laminate steel plates, and positioning the magnets of the rotor, and then making current flow through the coils. Arrangement of the coils are that several numbers of coils are placed in each position of the predetermined arrangement, and the coils are arranged near the boundary between the segment magnets 1 so that a longitudinal direction of the coils is along an axis of the rotor shaft 3, and current is flowed through said coils so that the current may flow in directions different from each other with respect to individual magnets adjacent to each other. Therefore, the coils are individually placed at all the positions between the magnets, and the direction of current flow is along the axis of the rotor shaft, as described above.

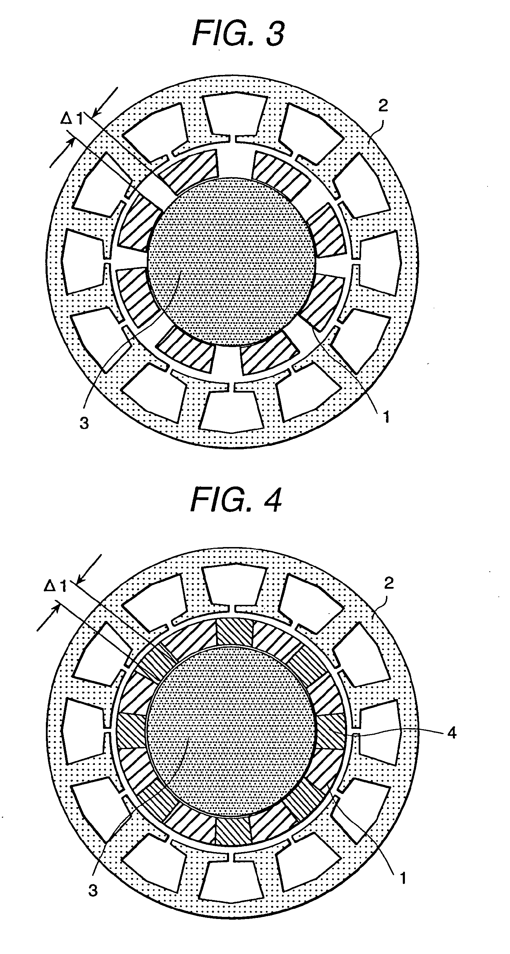

In order to suppress generation of eddy current, laminar magnetic steel plates or ceramics may be employed for the rotor shaft. It has been checked that the magnetic flux density distribution on the magnet surfaces obtained by the post-magnetization is nearly sinusoidal, and agrees with the magnetic flux density distribution obtained by the case of assembling the magnetized magnets. In the case of using a non-magnetic material, the rotor shaft is made of an organic material, a ceramic or the like. In the case of using a ferromagnetic material, the laminar steel plates may be integrated with the rotor shaft in a one-piece structure, or the rotor shaft may be made of a Fe or Ni or Co alloy. In addition, in order to improve the corrosion resistance of the magnet, the magnet surfaces may be covered with protective films, or the magnets without surface protective film may be protected by a thin thickness bond film after assembling. FIG. 3 is a cross-sectional view showing a rotor shaft in a case of about 75 % magnet volume ratio, and the structure is similar to that of FIG. 2.

FIG. 4 shows an embodiment in which the segment magnets 1 and the ferromagnetic material member 4 are alternatively arranged in the circumferential direction of the segment magnets 1. The saturation magnetic flux density of the ferromagnetic material is above 1.0 T, and the rotor shaft 3 and the ferromagnetic material members 4 may be integrated together when the rotor shaft 3 is made of a magnetic material. When the rotor shaft 3 is made of a non-magnetic material, the segment magnets and the ferromagnetic material members are alternatively arranged. Since eddy current is easily generated in the ferromagnetic material members 4 and the segment magnets 1, the eddy current in the ferromagnetic material member 4 can be reduced by forming the ferromagnetic material member 4 and the rotor shaft 3 of integrated laminar magnetic steel plates. Further, eddy current is easily generated in the segment magnet because the specific resistance of the NdFeB group or the SmCo group sintered magnet is small. In order to reduce the eddy current, the bond magnets may be used, or magnets made of a mixture of NbFeB or SmCo group magnet powder and an oxide or nitride powder, or magnet solidified magnet powder after surface treatment of the magnet powder may be used.

FIG. 6 and FIG. 7 shows the results of measured cogging torque and induced voltage obtained by rotating rotors having the structure described above inside a stator 2, respectively. FIG. 6 and FIG. 7 shows a case where a non-magnetic material (an organic material) member is interposed between the magnets and a case where the laminar magnetic steel plates are used. The cogging torque in the case where the ferromagnetic material member is interposed between the segment magnets is larger than that in the case where the non-magnetic material member is interposed between the segment magnets. Further, the induced voltage is also large. It can be understood that in order to realize low cogging torque and to reduce the magnet volume, the non-magnetic material member should be interposed between the magnets. Further, since the cogging torque is preferably smaller than 1.00E-03, the cogging torque in the both cases is slightly improved by interposing the ferromagnetic material member or the non-magnetic material member between the magnets compared to that in the case of 100 % magnet volume ratio. Particularly, it has been found that in the case of the non-magnetic material member, the cogging torque down to 60 % magnet volume ratio is nearly equal to that in the case of 100 % magnet volume ratio. Thereby, in the case where cogging force has precedence of induction voltage in design, the amount of the material used for the magnets can be reduced.

FIG. 5 shows an embodiment in which projections 6 are provided to the rotor shaft 3 in order to make assembling of the segment magnets 1 easy, and organic material member 5 made of a thermosetting resin is interposed into the gap between the magnets. Further, a ring-shaped magnet supporting member can be set in the outer circumference in the rotor so that the rotor withstands the stress at rotating. The segment magnet 1 is bonded with a bonding agent.

FIG. 8 shows a measured result of a surface magnetic flux density distribution on segment magnets for two pole portions after magnetizing the segment magnets. A point of inflection is observed at a point near 36 degrees because the non-magnetic gap exists between the magnets. Because of the nearly sinusoidal magnetization, the maximum magnetic flux density is higher than that in the case of the radial magnetization. Therefore, the magnetic flux exceeding the magnetic flux in the case of the radial ring magnet can be kept even when the magnet volume is reduced.

After manufacturing anisotropic sintered magnets, the segment magnets are arranged in a ring shape to measure degree of orientation in the c-axis direction by X-ray diffraction. FIG. 9 shows the measured result of the degree of orientation in the c-axis direction of the segment magnets (two pole portions). That is, an X-ray diffraction pattern is measured by rotating a ring-shaped sample, and the ratios of a (006) diffraction peak intensity to the other peak intensities are obtained. FIG. 9 shows the data of the ratios. The segment magnets are arranged in a ring shape, and the X-ray beam is incident to the magnet from a direction normal to the cross section of FIG. 2 to FIG. 5. That is, the X-ray is collimated and incident to the side face of the segment magnet, and the reflected intensity is measured. The diffraction pattern is measured for each rotation angle of the sample. A degree of orientation of a specified face can be obtained by dividing a diffraction peak intensity of the specified face index by the sum of the total peak intensities. In order to improve the accuracy of the degree of angle, a stage having a transferring accuracy higher than that of the measurement angle width or the X-ray width (in the angular direction) is used.

The diffraction intensity of the c-axis (the (006) diffraction peak intensity) shows the maximum value in the pole center of the segment magnet, and the degree of orientation is above 90 %. By using the segment magnets showing such orientation, the surface magnetic flux density distribution becomes nearly sinusoidal, and accordingly high induction voltage and low cogging torque can be attained.

As having been described above, according to the rotor having the segment magnets magnetized in the nearly sinusoidal waveform and having the non-magnetic material or ferromagnetic material member in each gap between the magnets, it is possible to provide a rotor which has high induced voltage and low cogging torque characteristics, and is high in the productivity and light in weight. Further, it is possible to easily perform inspection at mass-production in regard to an evaluating method of the anisotropy and the magnetized direction. Particularly, the rotor in accordance with the present invention is effective in application to a servo motor, and is suitable for a motor for transferring semiconductor devices and for a motor for positioning in a machine tool.

## Claims

1. A rotor having magnets (1) segmented in a circumferential direction of a periphery of a shaft (3), wherein magnetizing directions or magnetized directions of said magnets (1) continuously vary, and a non-magnetic material or a ferromagnetic material is interposed in a circumferential gap Δℓ between said segmented magnets (1).

2. A rotor according to claim 1, wherein each of said segmented magnets (1) is formed of an isotropic magnet or an anisotropic magnet containing a rare-earth element.

3. A rotor according to claim 1, wherein said shaft has projections on an outer periphery thereof, and said segmented magnets (1) are individually formed on said projections.

4. A rotor having magnets (1) segmented in a circumferential direction of a periphery of a shaft (3) wherein each of said segmented magnets (1) has a polar anisotropy and is formed of a bond magnet or a sintered magnet containing a rare-earth element, and a non-magnetic material or a ferromagnetic material is interposed in a circumferential gap Δℓ between said segmented magnets (1).

5. A rotor according to claim 4, wherein each of said segmented magnets (1) is formed of an isotropic magnet or an anisotropic magnet containing a rare-earth element.

6. A rotor according to claim 5, wherein said shaft (3) has projections on an outer periphery thereof, and said segmented magnets (1) are individually formed on said projections.

7. A method of manufacturing a rotor which has magnets (1) segmented in a circumferential direction of a periphery of a shaft and a non-magnetic material or a ferrogmagnetic material (4) interposed in a circumferential gap between said segmented magnets (1), wherein said segmented magnets (1) are formed by flowing current in a direction along an axis of said shaft to magnetize said segmented magnets (1).

8. A method of manufacturing a rotor according to claim 7, wherein said method comprises the steps of
arranging coils so that a longitudinal direction for said coils is along an axis of said shaft (3); and
magnetizing said segmented magnets (1) by flowing current through said coils.

9. A method of manufacturing a rotor according to claim 8, wherein said coils are arranged between said segmented magnets (1), and the current is flowed through said coils in directions different from each other with respect to said coils adjacent to each other.

10. A method of manufacturing a rotor according to claim 7, wherein said segmented magnets (1) each are made of a metal containing a rare-earth element, and the magnetization is performed before attaching said segmented magnets (1) or after attaching said segmented magnets (1) to said shaft (3).
